# EUROPÄISCHE PATENTANMELDUNG

(11) **EP 2 372 262 A2**
(43) Veröffentlichungstag der Anmeldung: **05.10.2011**
(21) Anmeldenummer: 11000343.1
(22) Anmeldetag: 18.01.2011
(51) Int. Cl.: F24F 3/044, F24F 12/00

(54) **Verfahren zum Klimatisieren, vorzugsweise Kühlen, eines Raumes**

(30) Priorität: 16.03.2010 DE 102010011624
(71) Anmelder: Kampmann GmbH, 49811 Lingen (Ems) (DE)
(72) Erfinder: Ensink, Hermann, Dipl.-Ing., 49846 Hoogstede (DE)
(74) Vertreter: Möller, Friedrich

(57) **Zusammenfassung**

Räume, in denen die Raumluft aufheizende Geräte betrieben werden, beispielsweise Serverräume, müssen gekühlt werden. Geschieht dieses mit Außenluft im Zweikreisprinzip, kann im Sommer bei hohen Außentemperaturen keine ausreichende Kühlung erfolgen. Gerade dann kommt es aber auf eine wirksame Kühlung an.

Die Erfindung sieht es vor, die Raumluft nach dem Prinzip der indirekten Verdunstung zu kühlen. Dabei dient Außenluft als Prozessluft zur Bildung von Verdunstungskälte. Auf diese Weise kann auch mit relativ warmer Außenluft die Raumluft ausreichend gekühlt werden.

## Beschreibung

Die Erfindung betrifft ein Verfahren zum Klimatisieren, vorzugsweise Kühlen, eines Raumes gemäß dem Oberbegriff des Anspruchs 1.

Räume für vor allem größere elektrisch betriebene Geräte, wie beispielsweise Computer, Server, Messgeräte oder dergleichen, müssen zumindest gekühlt werden, um die beim Betrieb entstehende Wärme abzuführen bzw. die Temperatur im Raum konstant oder in einem vorgegebenen Bereich zu halten. Gegebenenfalls kann es auch erforderlich sein, solche Räume zu lüften.

Es ist bekannt, Räume die von darin angeordneten elektrischen Geräten aufgeheizt werden, durch eine Zweikreiskühlung zu kühlen. Dabei wird mit kälterer Fremdluft, insbesondere Außenluft, mittels eines Wärmetauschers die wärmere Raumluft gekühlt. Dabei kann an heißen Sommertagen die Außenluft nicht mehr zum ausreichenden Kühlen der von den Geräte aufgeheizten Raumluft ausreichen. Es ist dann eine zusätzliche Kühlanlage erforderlich, die mit einem Kältemittel oder nach dem Wasser-Luft-Prinzip arbeitet.

Der Erfindung liegt die Aufgabe zugrunde, eine Vorrichtung zum Klimatisieren, insbesondere Kühlen, eines Raumes zu schaffen, die es mit geringem Aufwand ermöglicht, auch bei hohen Außentemperaturen den Raum ausreichend zu kühlen.

Eine Vorrichtung zur Lösung dieser Aufgabe weist die Merkmale des Anspruchs 1 auf. Demnach ist vorgesehen, die Raumluft zumindest teilweise nach dem Verdunstungsprinzip abzukühlen. Hierbei werden die der Raumluft abgewandten Wärmetauscherflächen des Wärmetauschers befeuchtet. Durch Verdunsten der Feuchtigkeit entsteht Verdunstungskälte, wodurch im Wärmetauscher die Raumluft abgekühlt wird. Diese Art der Kühlung ist mit einer einfachen Kühlvorrichtung bei verhältnismäßig geringem Energieaufwand herbeiführbar. Vor allem ist diese Art der Kühlung auch bei relativ hohen Außentemperaturen möglich.

Die Erfindung sieht es bevorzugt vor, bei der Verdunstungskühlung Fremdluft als Prozessluft zu verwenden. Die Prozessluft durchströmt den Wärmetauscher auf einer befeuchteten Seite der Wärmetauscherflächen, nämlich der Sekundärseite. Dabei verdunstet die Fremdluft die Feuchtigkeit, wodurch Verdunstungskälte zum Kühlen der als Umluft durch den Wärmetauscher geleiteten Raumluft zustande kommt. Als Fremdluft kann auch Außenluft verwendet werden, und zwar gegebenenfalls auch solche, die eine höhere Temperatur als die zu kühlende Raum- bzw. Umluft aufweist, weil die durch das Verdunsten der Flüssigkeit auf den sekundärseitigen Wärmetauscherflächen des Wärmetauschers entstehende Verdunstungskälte ein Kühlen der Umluft auf niedrige Temperaturen im Vergleich zur als Prozessluft verwendeten Außenluft oder einer anderen Fremdluft zulässt.

Es ist weiterhin vorgesehen, die zu kühlende Raumluft als Umluft vorzugsweise von mindestens einem Ventilator umzuwälzen und dabei durch den Wärmetauscher hindurchströmen zu lassen. Dadurch wird die Raumluft im Kreislauf geführt und hierbei mittels des mindestens einen Wärmetauschers gekühlt.

Gemäß einer bevorzugten Weiterbildung des Verfahrens ist es vorgesehen, gegebenenfalls alternativ die Raumluft bzw. Umluft von mindestens einem Wärmetauscher nach einem Zweikreisprinzip von der Fremdluft ohne Befeuchtung zu kühlen. Diese besonders einfache Art der Kühlung kann dann erfolgen, wenn die Fremdluft, insbesondere die Temperatur der als solche verwendeten Außenluft, geringer ist als die Solltemperatur der Raumluft. Dann kann auch mit der Fremdluft bzw. Außenluft die Raumluft auf die vorgesehene Temperatur gekühlt werden. Bei dieser Verfahrensweise ist das Kühlen der Raumluft nach dem Verdunstungsprinzip nur dann erforderlich, wenn die Temperatur der Fremdluft, insbesondere der Außenluft, hierzu nicht mehr ausreicht. Für beide Verfahrensweisen kann die gleiche Kühlvorrichtung verwendet werden. Es ist lediglich der mindestens eine Wärmetauscher bei nicht ausreichend kalter Fremdluft zu befeuchten, um dann mit wärmerer Fremdluft nach dem Verdunstungsprinzip die Raumluft auf eine Temperatur herunterzukühlen, die geringer ist als die Temperatur der Fremdluft.

Um eine Entscheidung treffen zu können, nach welchem Prinzip die Raumluft gekühlt wird, ist es bevorzugt vorgesehen, die Temperatur und/oder die Feuchte der Fremdluft zu messen und dementsprechend die Raumluft nach dem Verdampfungs- oder Zweikreisprinzip zu kühlen. Gemäß dieser Vorgehensweise kann ausgewählt werden, welche Betriebsweise möglich ist. Dabei wird bevorzugt die weniger Energie benötigte Zweikreiskühlung gewählt. Nur wenn hiermit die Raumtemperatur nicht ausreichend gekühlt werden kann, erfolgt die Kühlung nach dem Verdunstungsprinzip.

Eine bevorzugte Weiterbildung des Verfahrens sieht es vor, nach dem Kühlen der Umluft im Wärmetauscher die denselben als Zuluft für den zu kühlenden Raum verlassende Umluft vor oder unmittelbar nach dem Eintritt in den zu kühlenden Raum nachzukühlen. Das Nachkühlen kann dann erfolgen, wenn das alleinige Kühlen nach dem Zweikreisprinzip oder dem Verdunstungsprinzip nicht ganz ausreicht, so dass beim Nachkühlen die von dem Wärmetauscher gekühlte Umluft bzw. Zuluft noch geringfügig weiter abgekühlt werden kann. Dieses Nachkühlen, was nur das hauptsächliche Kühlen im Wärmetauscher ergänzt, kann mit einem einfachen Kühlgerät mit relativ geringer Leistung vorgenommen werden. Hierbei kann es sich um ein Kühlgerät konventioneller Klimaanlagen handeln, das nach dem Wasser-Luft-Prinzip oder Kältemittel-Prinzip arbeitet.

Vorzugsweise ist es vorgesehen, als Fremdluft Frischluft, und zwar vor allem Außenluft bzw. frische Außenluft, zu verwenden. In der Regel verfügt diese über eine geringere Temperatur als die Solltemperatur im zu kühlenden Raum, so dass durch Energieaustausch im Wärmetauscher die Raumluft gekühlt werden kann.

Eine vorteilhafte Ausgestaltung des Verfahrens sieht es vor, zusätzlich oder alternativ zum Kühlen den Raum zu lüften. Das Lüften kann insbesondere erforderlich sein, wenn im zu klimatisierenden Raum sich Geräte befinden, die eine bestimmte Feuchte in der Luft benötigen. Durch das Lüften mit Außenluft oder sonstiger Fremdluft kann die Feuchte im Raum so verändert werden, dass sie den Vorgaben entspricht.

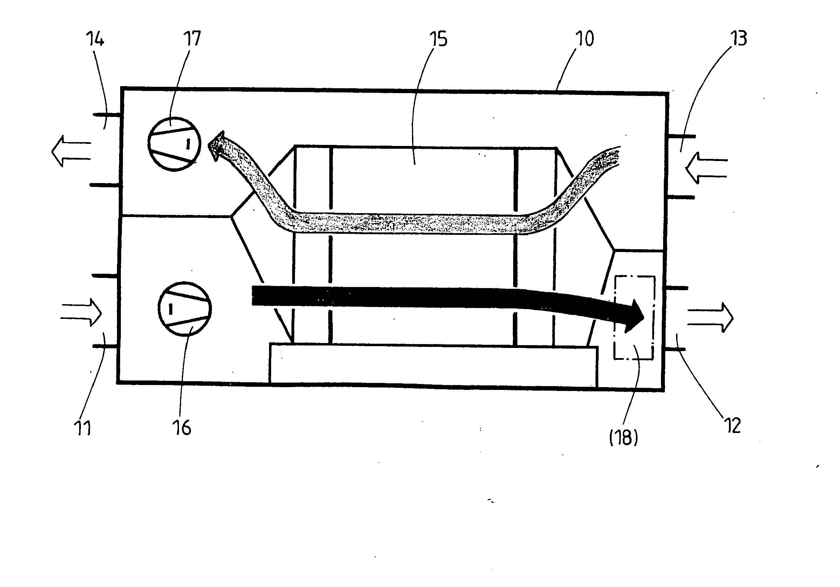

Nachfolgend wird ein bevorzugtes Ausführungsbeispiel der Erfindung näher erläutert. In der einzigen Figur der Zeichnung ist schematisch eine Kühlvorrichtung zur Durchführung des Verfahrens mit eingezeichneten Strömungswegen der Raumluft und der Fremdluft dargestellt.

Die gezeigte Kühlvorrichtung dient hauptsächlich zum Kühlen von Räumen, die durch vor allem elektrisch betriebene Geräte stark aufgeheizt werden. Im gezeigten Ausführungsbeispiel wird davon ausgegangen, dass es sich um einen Serverraum handelt. Es ist aber auch denkbar, Räume zu kühlen, in denen sich andere Geräte, wie Rechner, Bildschirme, Mess- oder Kontrollgeräte befinden. Zum Kühlen wird die Raumluft im Kreislauf durch die Kühlvorrichtung umgewälzt. Dadurch wird der Raumluft von außen keine Feuchtigkeit zugeführt oder entzogen.

Die hier gezeigte Kühlvorrichtung weist ein vorzugsweise quaderförmiges Gehäuse 10 auf. Das Gehäuse 10 verfügt über einen Umlufteinlass 11, einen Umluftauslass 12, einen Außenlufteinlass 13 und einen Außenluftauslass 14. Im Inneren des Gehäuses 10 befinden sich ein Wärmetauscher 15 sowie ein Umluftventilator 16 und ein Außenluftventilator 17. Es ist denkbar, vor allem dem Umlufteinlass 11 und dem Außenlufteinlass 13 mindestens einen in der Zeichnung nicht dargestellten Filter zuzuordnen.

Der Wärmetauscher 15 weist eine von der zu kühlenden Raumluft als Umluft durchströmte Primärseite und eine von der Außenluft durchströmte Sekundärseite auf. Die Wärmetauscherflächen des Wärmetauschers 15 sind auf der Sekundärseite mit einer mindestens teilweise hydrophilen Beschichtung versehen, die durch Berieseln mit Wassertropfen erzeugt werden kann. Zum Berieseln können nicht gezeigte Sprinkler oder dergleichen dienen. Durch das Berieseln oder auf andere Weise erfolgende Befeuchten bildet sich auf der hydrophilen Beschichtung der Wärmetauscherflächen auf der Sekundärseite des Wärmetauschers 15 ein dünner Wasserfilm. Denkbar ist es auch, den Wärmetauscher 15 mit einer Vorkammer zu versehen, in der die Befeuchtung alternativ oder zusätzlich stattfindet.

Vom Umluftventilator 16 wird die zu kühlende Raumluft als Umluft im Kreislauf umgewälzt, und zwar an der Primärseite des Wärmetauschers 15 entlang und durch den Umluftauslass 12 als abgekühlte Zuluft wieder in den zu kühlenden Raum eingeblasen. Außenluft, und zwar frische Außenluft, oder andere Fremdluft wird vom Außenluftventilator 17 durch den Außenlufteinlass 13 angesaugt, als Prozessluft durch die Sekundärseite des Wärmetauschers 15 hindurchtransportiert und als Fortluft durch den Außenluftauslass 14 ausgeblasen.

In der Figur ist punkt-strich-liniert ein Nachkühler 18 angedeutet. Im hier beschriebenen Ausführungsbeispiel befindet sich der Nachkühler 18 im Gehäuse 10, und zwar vor dem Umluftauslass 12. Es ist aber auch denkbar, den Nachkühler 18 außerhalb des Gehäuses 10 hinter dem Umluftauslass 12 anzuordnen. Beim Nachkühler 18 kann es sich um eine konventionelle Klimaanlage handeln, insbesondere eine solche mit geringerer Kühlleistung als die Kühlvorrichtung mit dem Wärmetauscher 15. Diese Klimaanlage kann nach dem Luft-Wasser-Prinzip oder mit Kältemittel arbeiten und dazu einen eigenen, vorzugsweise kleineren, Wärmetauscher aufweisen.

Im zu kühlenden Raum kann ein nicht gezeigter Temperatursensor vorhanden sein, der die Kühlvorrichtung so steuert bzw. regelt, dass eine Solltemperatur oder ein Solltemperaturbereich eingehalten wird. Zusätzlich kann ein Außenluftfühler vorgesehen sein, der die Temperatur der Außenluft ermittelt und die Kühlvorrichtung so steuert oder regelt, dass sie entweder nach dem Verdunstungsprinzip oder im Zweikreisprinzip arbeitet. Ebenso kann die Steuerung oder Regelung dazu dienen, bei Bedarf den mindestens einen Nachkühler 18 zuzuschalten und auszuschalten, wenn eine Nachkühlung nicht mehr erforderlich ist.

Mit der zuvor beschriebenen Kühlvorrichtung arbeitet das erfindungsgemäße Verfahren folgendermaßen:

Die Raumluft im zu kühlenden Raum wird gekühlt, wenn der Temperaturfühler im Raum eine steigende Raumtemperatur feststellt oder eine Raumtemperatur misst, die oberhalb der Solltemperatur bzw. des Solltemperaturbereichs liegt. Der Temperaturfühler für die Außenluft stellt fest, ob die Außenluft ausreicht zum bedarfsgemäßen Kühlen der Raumluft nach dem Zweikreisprinzip oder bei einer zu hohen Außentemperatur die Raumluft durch eine indirekte Verdunstung gekühlt werden muss. Werden - was kurzfristig der Fall sein kann - hohe Kühlleistungen gefordert, erfolgt eine zusätzliche Kühlung durch den Nachkühler 18.

Ist die frische Außenluft oder sonstige Fremdluft aufgrund einer ausreichend geringeren Temperatur zur Kühlung der Raumluft geeignet, erfolgt das Kühlen im Zweikreisbetrieb der Kühlvorrichtung. Dabei findet keine Befeuchtung des Wärmetauschers 15 statt. Die Außenluft strömt dann an den trockenen Wärmetauscherflächen der Sekundärseite des Wärmetauschers 15 vorbei. Dabei wird die Außenluft vom Außenluftventilator 17 durch die Sekundärseite des Wärmetauschers 15 gesaugt und durch den Außenluftauslass 14 als Fortluft ausgeblasen, und zwar bevorzugt ins Freie. Die zu kühlende Raumluft wird im Kreislauf als Umluft durch die Primärseite des Wärmetauschers 15 geleitet. Der Kreislauf der Umluft wird vom Umluftventilator 16 herbeigeführt, der die Umluft durch den Wärmetauscher 15 strömen lässt. Die dabei von der kälteren Außenluft im Wärmetauscher 15 abgekühlte Umluft wird durch den Umluftauslass 12 als Zuluft wieder in den Raum geblasen. Wärmere Abluft aus dem Raum wird zur Bildung der Zuluftströmung vom Umluftventilator 16 durch den Umlufteinlass 11 wieder zum Wärmetauscher 15 zurückgeleitet zur Bildung eines ununterbrochenen Umluftkreislaufs.

Wenn die Temperatur der Außenluft so hoch ist, dass in der Zweikreiskühlung die Raumluft nicht ausreichend abgekühlt werden kann, erfolgt erfindungsgemäß eine Kühlung nach dem Verdunstungsprinzip. Hierbei wird der Wärmetauscher 15 befeuchtet, so dass die Wärmetauscherflächen auf der Sekundärseite des Wärmetauschers 15 einen vorzugsweise geschlossenen Flüssigkeitsfilm aufweisen, der von der hydrophilen Oberfläche der Wärmetauscherflächen auf der Sekundärseite des Wärmetauschers 15 begünstigt wird. Zur Durchführung der indirekten Verdunstungskühlung wird Außenluft oder sonstige Fremdluft als Prozessluft verwendet. Die Außenluft oder sonstige Femdluft wird vom Außenluftventilator 17 durch den Außenlufteinlass 13 angesaugt. Der Außenluftventilator 17 saugt dann die Außenluft an der Sekundärseite durch den Wärmetauscher 15, wobei die Außenluft die Feuchtigkeit auf der sekundärseitigen Wärmetauscherfläche des Wärmetauschers 15 nach und nach verdampft und die dabei entstehende Verdunstungskälte die im Kreislauf geführte Raumluft bzw. Umluft auf der Primärseite des Wärmetauschers 15 kühlt. Bei der beschriebenen Betriebsweise des Wärmetauschers 15 dient die Außenluft als Prozessluft zum Verdunsten der Feuchtigkeit bzw. Flüssigkeit auf der sekundärseitigen Wärmetauscherfläche und zur Erzielung der dadurch hervorgerufenen Verdunstungskälte. Die Außenluft verlässt das Gehäuse 10 der Kühlvorrichtung durch den Außenluftauslass 14, um als Fortluft ins Freie geleitet zu werden.

Die im Kreislauf geführte Umluft mit der zu kühlenden Raumluft wird vom Umluftventilator 16 am Umlufteinlass 11 in das Gehäuse 10 eingesaugt und durch die Primärseite des Wärmetauschers 15 geblasen. Dabei wird die Umluft infolge der auf der sekundärseitigen Wärmetauscherfläche entstehenden Verdunstungskälte auf der Primärseite abgekühlt. Die den Wärmetauscher 15 verlassende abgekühlte Umluft wird vom Umluftventilator 16 durch den Umluftauslass 12 aus dem Gehäuse 10 herausgeblasen, wo sie als abgekühlte Zuluft wieder in den zu kühlenden Raum gelangt.

Falls eine der beiden vorstehend beschriebenen Betriebsweisen des Wärmetauschers 15 noch zu keiner ausreichenden Abkühlung der Raumluft führt, erfolgt durch den Nachkühler 18 ein weiteres Abkühlen der Umluft, so dass diese nach dem Einblasen in den Raum ausreichend kalt ist, um die Luft im Serverraum oder einem sonstigen zu kühlenden Raum ausreichend abzukühlen.

### Bezugszeichenliste:

- 10: Gehäuse
- 11: Umlufteinlass
- 12: Umluftauslass
- 13: Außenlufteinlass
- 14: Außenluftauslass
- 15: Wärmetauscher
- 16: Umluftventilator
- 17: Außenluftventilator
- 18: Nachkühler

## Patentansprüche

1. Verfahren zum Klimatisieren, vorzugsweise Kühlen, eines Raumes, wobei zu kühlende Raumluft durch einen Wärmetauscher (15) geleitet und abgekühlt wird, **dadurch gekennzeichnet, dass** die Raumluft zumindest zeitweise nach dem Verdunstungsprinzip gekühlt wird.

2. Verfahren nach Anspruch 1, **dadurch gekennzeichnet, dass** bei der Verdunstungskühlung Fremdluft als Prozessluft verwendet wird.

3. Verfahren nach Anspruch 1 oder 2, **dadurch gekennzeichnet, dass** der Wärmetauscher (15) bei der Verdunstungskühlung der Raumluft auf seiner von der Fremdluft durchströmten Sekundärseite befeuchtet wird.

4. Verfahren nach einem der vorhergehenden Ansprüche, **dadurch gekennzeichnet, dass** die zu kühlende Raumluft aus im Kreislauf umgewälzter Umluft durch den Wärmetauscher (15) gepumpt wird, vorzugsweise von mindestens einem Umluftventilator (16).

5. Verfahren nach einem der vorhergehenden Ansprüche, **dadurch gekennzeichnet, dass** gegebenenfalls alternativ die Raumluft vom Wärmetauscher (15) nach einem Zweikreisprinzip von der Fremdluft ohne Befeuchtung der Sekundärseite des Wärmetauschers (15) gekühlt wird.

6. Verfahren nach einem der vorhergehenden Ansprüche, **dadurch gekennzeichnet, dass** die Temperatur und/oder die Feuchte der Fremdluft gemessen werden und dementsprechend ausgewählt wird, ob das Kühlen nach dem Verdunstungs- oder dem Zweikreisprinzip erfolgt.

7. Verfahren nach einem der vorhergehenden Ansprüche, **dadurch gekennzeichnet, dass** das Kühlen nach dem Zweikreisprinzip erfolgt, wenn die Temperatur der Fremdluft ausreichend niedrig ist und/oder aufgrund der Feuchte der Fremdluft eine Verwendung derselben als Prozessluft ungünstig ist.

8. Verfahren nach einem der vorhergehenden Ansprüche, **dadurch gekennzeichnet, dass** nach dem Kühlen der Raumluft bzw. Umluft im Wärmetauscher (15) die denselben als Zuluft verlassende Raumluft bzw. Umluft vor oder nach dem Eintritt in den zu kühlenden Raum nachgekühlt wird.

9. Verfahren nach einem der vorhergehenden Ansprüche, **dadurch gekennzeichnet, dass** als Fremdluft Frischluft, vorzugsweise Außenluft, verwendet wird.

10. Verfahren nach einem der vorhergehenden Ansprüche, **dadurch gekennzeichnet, dass** zum Lüften des Raumes und/oder zum Befeuchten der Raumluft Fremdluft, insbesondere Außenluft, verwendet wird, die die Raumluft bzw. Umluft wenigstens teilweise ersetzt.
